# EUROPÄISCHE PATENTSCHRIFT

(11) **EP 3 102 359 B1**
(45) Veröffentlichungstag und Bekanntmachung des Hinweises auf die Patenterteilung: **05.05.2021**
(21) Anmeldenummer: 15702788.9
(22) Anmeldetag: 05.02.2015
(51) Int. Cl.: B23K 26/082, B23K 26/044, B23K 26/03, B23K 26/08, B23K 26/28, B23K 26/38

(54) **VERFAHREN UND VORRICHTUNG ZUM LASERSCHWEISSEN ODER -SCHNEIDEN MIT EINEM DYNAMISCH ANPASSBAREN ANALYSEBEREICH**
METHOD AND DEVICE FOR LASER WELDING OR CUTTING WITH A DYNAMICALLY ADAPTABLE ANALYSIS REGION
PROCÉDÉ ET DISPOSITIF DE SOUDAGE OU DÉCOUPE AU LASER À DOMAINE D'ANALYSE ADAPTABLE DYNAMIQUEMENT

(30) Priorität: 07.02.2014 DE 102014101568; 15.09.2014 DE 102014113283
(43) Veröffentlichungstag der Anmeldung: 14.12.2016
(73) Patentinhaber: Blackbird Robotersysteme GmbH, 85748 Garching (DE)
(72) Erfinder: VOGEL, Wolfgang, 85716 Lohhof (DE); MUNZERT, Ulrich, 85402 Kranzberg (DE)
(74) Vertreter: Canzler & Bergmeier Patentanwälte Partnerschaft mbB
(86) Internationale Anmeldenummer: PCT/EP2015/052444
(87) Internationale Veröffentlichungsnummer: WO 2015/118080

(56) Entgegenhaltungen:
- DE-A1-102008 029 063
- DE-A1-102008 029 063
- US-A- 4 568 816
- US-A- 4 568 816
- US-A- 4 907 169
- US-A- 4 907 169
- US-A1- 2012 039 524
- US-A1- 2012 039 524

## Beschreibung

Die vorliegende Erfindung betrifft ein Verfahren zum Schweißen oder Schneiden von zumindest einem Werkstück mittels eines Lasers, bei welchem ein Laserstrahl in Abhängigkeit von Bewegungsdaten eines Manipulators und eines vom Werkstück beabstandeten Strahlleitsystems entlang einer zu schweißenden oder schneidenden Bahn geführt wird, wobei zuvor offline eine Näherungsposition der Bahn festgelegt, online zur Genauigkeitsverbesserung mittels eines optischen Erfassungssystems zumindest die Position eines Referenzmerkmals des Werkstücks in einem Analysebereich, der zur Erhöhung der Auswertungsgeschwindigkeit einen Teilausschnitt eines Erfassungsbereiches des Erfassungssystems bildet, ermittelt, anhand der Position des Referenzmerkmals eine Soll-Position der Bahn bestimmt, die Näherungsposition mit der Soll-Position der Bahn verglichen und die Bahn bei Positionsabweichungen nachgeregelt wird. Des Weiteren betrifft die Erfindung eine Vorrichtung zum Schweißen oder Schneiden von zumindest einem Werkstück mittels eines Lasers mit einem in Abhängigkeit einer zu schweißenden oder schneidenden Bahn des Laserstrahls programmierbaren Manipulator, einem zum Ablenken des Laserstrahls geeigneten Strahlleitsystem, das zum Datenaustausch mit dem Manipulator verbunden ist, und einem mit dem Strahlleitsystem bzw. dessen Steuereinheit zum Datenaustausch verbundenen optischen Erfassungssystem, das einen Punkt-Abstandssensor mit einem Erfassungsbereich und eine Bildauswerteeinrichtung umfasst, die derart ausgebildet ist, dass mittels dieser die Position zumindest eines Referenzmerkmals in einem Analysebereich, der einen Teilausschnitt des Erfassungsbereiches bildet, ermittelbar, anhand der Position des Referenzmerkmals eine Soll-Position der Bahn bestimmbar, eine zuvor offline festgelegte Näherungsposition der Bahn mit der Soll-Position vergleichbar und bei Positionsabweichungen die Bahn nachregelbar ist.

Aus der EP 1 099 506 B1 ist ein Verfahren zur Messung von Prozessparametern eines Materialbearbeitungsprozesses - unter Verwendung eines relativ zum Manipulator unbeweglichen Laserkopfes - mit einem auf eine Bearbeitungszone eines Werkstücks fokussierten Hochenergiestrahls bekannt. Hierbei wird mittels eines Sensors die Lichtintensität koaxial zur Hochenergiestrahlung in der Bearbeitungszone im Bereich einer von dem Hochenergiestrahl erzeugten Dampfkapillare gemessen. Der Sensor tastet ein Bildfeld ab, wobei dessen Messsignale einer Auswerteeinrichtung zugeführt werden. In dem von dem optischen Sensor erfassten Bildfeld werden unterschiedliche Bildausschnitte frei wählbar festgelegt. Zur Überwachung der Prozessparameter werden ausschließlich die Messsignale dieser Bildausschnitte verwertet. Zur Messung der Nahtlage und zur Steuerung der Laserposition oder der Werkstückposition wird ein Bildausschnitt in Arbeitsrichtung vorder Bearbeitungszone verwendet. Die Position des Bildausschnitts wird offline einmalig festgelegt. Mit diesem Bildausschnitt ist beispielsweise die Nahtverfolgung möglich, so dass der Bearbeitungsprozess komplizierten Konturen folgen kann, indem eine vorgegebene Bahn abgetastet und der Laserstrahl entsprechend gesteuert wird. Nachteilig hierbei ist, dass dieses Verfahren bei überlagerten Bewegungen eines Manipulators und eines Strahlleitsystems nicht anwendbar ist, da sich hierbei die Lage und/oder Orientierung des Bildausschnitts gegenüber der zu schweißenden oder scheidenden Bahn ständig ändert.

Aus der US 4,907,169 A, welche den Oberbegriff der Ansprüche 1 und 11 offenbart, ist ein Sensorsystem zur Verwendung in Robotersystemen bekannt. Das Sensorsystem wird verwendet, um ein Merkmal, das vom Roboter bearbeitet werden soll, zu verfolgen und in Echtzeit Führungsinformation an den Roboter zu liefern. Das Bildverarbeitungssystem arbeitet mit einem Lichtschnittverfahren, bei dem ein Lichtmuster auf die Werkstückoberfläche projiziert wird, das dann von einer Kamera erfasst wird. Das Bildverarbeitungssystem führt eine Suche durch, um ein Merkmal basierend auf einer a priori Kenntnis des Merkmals zu lokalisieren. Anschließend verfolgt das System das Merkmal, indem es vorausscannt, zukünftige Scans adaptiv plant, den Merkmals-Pfad vorhersagt und die Daten auswählt, die zur Reduzierung der Verarbeitungszeit verwendet werden sollen. Wenn das Merkmal während des Vorausscannens verloren geht, führt das Bildverarbeitungssystem eine Wiederherstellungssuche durch. Wenn das Merkmal nicht wiederhergestellt werden kann, wird dem Bediener ein Signal gegeben.

Vergleichbare Systeme sind auch aus der US 4,568,816 A und US 2012/0039524 A1 vorbekannt.

Aufgabe der vorliegenden Erfindung ist es somit, ein Verfahren sowie eine Vorrichtung zu schaffen, bei dem bzw. mittels der sowohl die Genauigkeit als auch die Fehlerrobustheit bei bewegungsüberlagernden Laserschweiß- und/oder Laserschneidprozessen verbessert wird.

Die Aufgabe wird gelöst durch ein Verfahren sowie eine Vorrichtung mit den Merkmalen der unabhängigen Patentansprüche.

Vorgeschlagen wird ein Verfahren zum Schweißen oder Schneiden von zumindest einem Werkstück mittels eines Lasers, bei welchem ein Laserstrahl in Abhängigkeit von Bewegungsdaten eines Manipulators, insbesondere eines Industrieroboters, und eines vom Werkstück beabstandeten Strahlleitsystems, welches vorzugsweise mehrere bewegliche und/oder über einen Spiegelantrieb angetriebene Spiegel zur gezielten Ablenkung und/oder Fokussierung des Laserstrahls umfasst, entlang einer zu schweißenden oder schneidenden Bahn geführt wird. Hierbei wird zuvor offline eine Näherungsposition der Bahn festgelegt. Diese Näherungsposition der Bahn wird vorzugsweise anhand von Geometriedaten eines Referenzwerkstücks vor Beginn des eigentlichen Schweiß- oder Schneidprozesses - d.h. offline - bestimmt. Die Geometriedaten des Referenzwerkstücks können auf CAD-Daten basieren und/oder durch die Vermessung des Referenzwerkstücks und/oder durch eine Teach-In-Programmierung ermittelt werden. Bei der Teach-In-Programmierung fährt ein Programmierer den Roboter mit einer Steuerkonsole in die gewünschte Position. Alle auf diesem Weg erreichten Koordinatenpunkte werden in der Steuerung gespeichert. Dieser Schritt wird so lange wiederholt, bis ein gesamter Arbeitszyklus einmal durchlaufen ist. Da die tatsächlichen Geometriedaten des zu schneidenden und/oder zu schweißenden Werkstücks, beispielsweise aufgrund von Fertigungstoleranzen und/oder Lagetoleranzen der Spannvorrichtungen, von den idealisierten Geometriedaten des Referenzwerkstücks abweichen können, kann diese Näherungsposition der Bahn während des tatsächlichen Schweißprozesses nicht der Idealposition entsprechen. Aufgrund dessen wird online - d.h. während des Schweiß- oder Schneidprozesses - zur Genauigkeitsverbesserung mittels eines optischen Erfassungssystems die Position zumindest eines Referenzmerkmals des Werkstücks in einem Analysebereich ermittelt. Zur Erhöhung der Auswertungsgeschwindigkeit bildet der Analysebereich einen Teilausschnitt eines vom Erfassungssystem maximal erfassbaren Erfassungsbereiches. Unter der Begrifflichkeit "Erfassungsbereich" ist derjenige Bereich zu verstehen, innerhalb dessen sensorisch Daten erfasst werden können. Die Daten müssen hierbei nicht zwangsläufig in dem gesamten Erfassungsbereich gleichzeitig erfassbar sein, wie dies beispielsweise bei einem Bildsensor der Fall wäre. Bei einem 2D-Bildsensor, bzw. bei einer 2D-Kamera, würde demnach der Öffnungswinkel den Erfassungsbereich definieren. Der gesamte Erfassungsbereich wäre somit vollständig im Wesentlichen zu einem einzigen Zeitpunkt, d.h. frameweise, erfassbar.

Gemäß der Erfindung wird der gesamte Erfassungsbereich nicht gleichzeitig, sondern innerhalb eines Zeitfensters abgetastet. Dies ist mit einem als Punkt-Abstandssensor ausgebildeten Sensor möglich, mittels dem Topologien erfassbar sind. Derartige Punkt-Abstandssensoren weisen einen Sensorpunkt auf, in dem sie zu einem Zeitpunkt Daten erfassen können. Dieser Sensorpunkt ist innerhalb des Erfassungsbereiches bewegbar. Der Erfassungsbereich stellt demnach denjenigen Bereich dar, innerhalb dessen der Sensorpunkt theoretisch verfahren bzw. bewegt werden kann und infolgedessen Daten erfassen kann. Der Sensorpunkt des bewegbaren Punkt-Abstandssenors, in dem zu einem konkreten Zeitpunkt Daten erfasst werden können, würde dann innerhalb des Erfassungsbereiches bewegbar sein. Der Erfassungsbereich würde somit den maximalen Auslenkbereich des, insbesondere über einen drehbaren Spiegel, beweglichen Punkt-Abstandssensor darstellen. Mit anderen Worten wäre demnach der Erfassungsbereich derjenige Bereich, innerhalb dessen der Sensorpunkt maximal verfahrbar ist. Der Analysebereich bildet demnach zumindest teilweise den Teilausschnitt des Erfassungsbereiches, in dem der Sensorpunkt tatsächlich verfahren wird. Unter der Begrifflichkeit "Analysebereich" ist somit derjenige Teilbereich des Erfassungsbereiches zu verstehen, dessen Daten tatsächlich zur nachstehend beschriebenen Regelung herangezogen werden.

Wenn der Analysebereich nur einen Teilbereich des Erfassungsbereiches bildet, muss vorteilhafterweise nicht der gesamte Erfassungsbereich analysiert werden, sondern lediglich der durch den Analysebereich gebildete Teilausschnitt, wodurch die Auswertegeschwindigkeit erhöht werden kann. In einem weiteren Verfahrensschritt wird anhand der Position des Referenzmerkmals eine Soll-Position der Bahn, insbesondere auf dem Werkstück, bestimmt. Anschließend wird die Näherungsposition mit der Soll-Position der Bahn verglichen und die Bahn bei Positionsabweichungen nachgeregelt. Vorteilhafterweise können die Bewegungsdaten des Manipulators und/oder des Strahlleitsystems mittels dieser nachgeregelten Bahnposition derart angepasst werden, dass der Laserstrahl gemäß seiner Idealposition über das Werkstück bewegt wird.

Dadurch, dass der Analysebereich nur einen Teilausschnitt des gesamten Erfassungsbereiches bildet, kann es aufgrund der überlagerten Bewegungen des Manipulators und des Strahlleitsystems dazu kommen, dass das Referenzmerkmal aus dem Analysebereich austritt und infolgedessen keine Genauigkeitsverbesserung erfolgen kann. Zur Erhöhung der Fehlerrobustheit, insbesondere während des Onlinebetriebes, wird deshalb mittels des optischen Erfassungssystems die Größe, Position und/oder Orientierung des Analysebereiches innerhalb des Erfassungsbereiches dynamisch angepasst. Hierdurch kann sichergestellt werden, dass sich das Referenzmerkmal bei einer überlagerten Bewegung des Manipulators und des Strahlleitsystems nicht aus dem Analysebereich bewegt, so dass eine im Wesentlichen kontinuierliche Genauigkeitsverbesserung während des Onlinebetriebes erfolgen kann. Des Weiteren kann hierdurch die Analysegeschwindigkeit des Analysebereiches erhöht werden, indem beispielsweise die Größe des Analysebereiches in fehlerunkritischen Zeitintervallen - d.h. wenn keine starken Positionsänderungen des Referenzmerkmals innerhalb des Erfassungsbereiches zu erwarten sind - verkleinert und in fehlerkritischen Zeitintervallen vergrößert wird.

Die dynamische Anpassung der Größe, Position und/oder Orientierung des Analysebereiches innerhalb des Erfassungsbereiches erfolgt in Abhängigkeit von zumindest einem, insbesondere die Position des Referenzmerkmals innerhalb des Erfassungsbereiches näherungsweise bestimmenden, Offlineparameters und/oder, insbesondere beeinflussenden, online Parameters. Unter der Begrifflichkeit "Offlineparameter" sind jegliche Parameter zu verstehen, die bereits vor Beginn des eigentlichen Schweiß- oder Schneidprozesses - d.h. offline - bekannt und/oder zumindest näherungsweise bestimmbar sind. Derartige Offlineparameter können beispielsweise die Geometriedaten des Referenzwerkstücks, die durch diese Geometriedaten bestimmte Näherungsposition der Bahn auf dem Werkstück und/oder im Erfassungsbereich und/oder die daraus abgeleiteten offline bestimmten und/oder abgespeicherten Bewegungsdaten des Manipulators und/oder Strahlleitsystems sein. Bereits durch diese Offlineparameter kann die zu erwartende Position des Referenzmerkmals innerhalb des Erfassungsbereiches zumindest näherungsweise bestimmt werden.

Die näherungsweise bestimmte Position des Referenzmerkmals und/oder die näherungsweise bestimmten Offlineparameter werden jedoch online beeinflusst. Infolgedessen kann die dynamische Anpassung des Analysebereiches innerhalb des Erfassungsbereiches noch weiter verbessert werden, wenn zusätzlich oder alternativ, wie bereits vorstehend erwähnt, zumindest ein Onlineparameter zur dynamischen Anpassung des Analysebereiches herangezogen wird. Unter der Begrifflichkeit "Onlineparameter" sind jegliche Parameter zu verstehen, die während des tatsächlichen Schweiß- oder Schneideprozesses - d.h. online - die näherungsweise bestimmten Werte der Offlineparameter und/oder des Referenzmerkmals beeinflussen. Infolgedessen kann vorteilhafterweise auch online mittels der Onlineparameter jegliche die Position des Referenzmerkmals innerhalb des Erfassungsbereiches verändernden Einflussparameter zur dynamischen Anpassung des Analysebereiches herangezogen werden, wodurch die Wahrscheinlichkeit, dass sich das Referenzmerkmal außerhalb des Analysebereiches befindet, stark reduziert werden kann.

Der Erfassungsbereich ist derjenige Bereich, den das optische Erfassungssystem, nämlich ein Punkt-Abstandssensor, mittels eines, insbesondere über zumindest einen drehbaren Spiegel, bewegbaren Sensorpunktes innerhalb eines Zeitfensters punktuell abtasten kann.

Vorteilhaft ist es, wenn der Analysebereich in Abhängigkeit zumindest eines die Näherungsposition der Bahn im Erfassungsbereich bestimmenden und/oder beeinflussenden Parameters angepasst wird. Diesbezüglich ist es insbesondere vorteilhaft, wenn die Anpassung des Analysebereiches in Abhängigkeit der offline ermittelten und/oder der abgespeicherten Geometriedaten des Referenzwerkstücks erfolgt.

Auch ist es vorteilhaft, wenn die dynamische Anpassung des Analysebereiches in Abhängigkeit von Bahn-Positionsdaten, insbesondere der Näherungsposition, der Soll-Position und/oder der nachgeregelten Bahnposition, erfolgt. Durch eine derartige dynamische Anpassung des Analysebereiches in Abhängigkeit der offline näherungsweise bestimmten und/oder der online mittels der Nachregelung korrigierten Bahn-Positionsdaten kann die Genauigkeit der zu erwartenden Position des Referenzmerkmals innerhalb des Erfassungsbereiches zur tatsächlichen Position des Referenzmerkmals sehr gut angenähert werden. Hierdurch kann die Abweichung von der näherungsweise bestimmten, insbesondere berechneten, Position des Referenzmerkmals innerhalb des Erfassungsbereiches im Vergleich zu dessen unbekannter tatsächlichen Position reduziert werden.

Auch kann die Genauigkeit der dynamischen Anpassung des Analysebereiches verbessert werden, wenn die dynamische Anpassung des Analysebereiches in Abhängigkeit der aktuellen und/oder der innerhalb eines bestimmten Zeitfensters zu erwartenden Position und/oder Orientierung des Manipulators und/oder des Strahlleitsystems, insbesondere zumindest eines Spiegels, erfolgt. Da die überlagerten Bewegungen des Manipulators und des Strahlleitsystems die Position des Referenzmerkmals bzw. der zu schweißenden oder schneidenden Bahn innerhalb des Erfassungsbereiches stark beeinflussen, kann durch eine derartige Berücksichtigung der aktuellen und/oder der zu erwartenden Bewegungsdaten eine sehr genaue und schnelle Anpassung des Analysebereiches erfolgen. Hierdurch kann wiederum das Risiko reduziert werden, dass sich das Referenzmerkmal außerhalb des angepassten Analysebereiches befindet.

Diesbezüglich ist es ferner vorteilhaft, wenn die aktuelle und/oder die innerhalb eines bestimmten Zeitfensters zu erwartende Position und/oder Orientierung des Manipulators und/oder des Strahlleitsystems anhand der offline vorbestimmten und/oder abgespeicherten Bewegungsdaten zumindest näherungsweise bestimmt wird und/oder online, insbesondere kontinuierlich oder in diskreten Zeitintervallen, ermittelt wird. Insbesondere zur online Ermittlung der Bewegungsdaten ist es vorteilhaft, wenn das optische Erfassungssystem zum Datenaustausch mit der Manipulator- und/oder der Strahlleitsystemsteuerung verbunden ist.

Zur Erhöhung der Fehlerrobustheit ist es vorteilhaft, wenn innerhalb des Erfassungsbereiches, insbesondere mittels zumindest eines Online- und/oder Offlineparameters, zumindest ein Erwartungsbereich der Position des Referenzmerkmals und/oder der Soll-Position der Bahn bestimmt wird. Der Erwartungsbereich umfasst die näherungsweise bestimmte, zu erwartende Position des Referenzmerkmals innerhalb des Erfassungsbereiches. Mittels des Erwartungsbereiches können Ungenauigkeiten bei der näherungsweisen Bestimmung der Position des Referenzmerkmals abgefangen werden. Demnach wird durch die Größe des Erwartungsbereiches ein Fehlertoleranzbereich bestimmt.

Auch ist es vorteilhaft, wenn der, insbesondere als Quadrat, Rechteck und/oder Linie ausgebildete, Analysebereich derart angepasst wird, dass dieser den Erwartungsbereich, insbesondere zentrisch, beinhaltet. Hierdurch kann die Wahrscheinlichkeit erhöht werden, dass sich das Referenzmerkmal auch wirklich innerhalb des Analysebereiches befindet. Aus selbigem Grund ist es ferner vorteilhaft, wenn zumindest eine Begrenzungslinie des Analysebereiches orthogonal zu einem Bewegungsvektor der Bahn, der vorzugsweise näherungsweise bestimmt wurde, ausgerichtet wird.

Vorteilhaft ist es, wenn die Größe, Orientierung und/oder Position des, insbesondere angepassten, Analysebereiches relativ zur aktuellen Laserposition bzw. Prozessortposition ermittelt und/oder gespeichert wird. Hierdurch kann ein zeitlicher und/oder räumlicher Bezug zwischen dem ermittelten Bahnkorrekturwert - d.h. der Abweichung der Näherungsposition von der Soll-Position der Bahn - und den die aktuelle Position des Prozessortes bestimmenden Bewegungsdaten des Manipulators und/oder des Strahlleitsystems hergestellt werden. Infolgedessen kann somit bestimmt werden, wann der im zeitlichen Vorlauf, insbesondere für einen definierten Zeitpunkt und/oder für eine definierte Position des Prozessortes, bestimmte Bahnkorrekturwert einzuregeln ist und/oder eingeregelt sein muss.

Die korrigierte Nachregelung der Bahn kann auf einfache Art und Weise erfolgen, wenn diese orthogonal zur Bahn - insbesondere zu einer Bahntangente und/oder einem Bewegungsvektor der Bahn und/oder zu einem bestimmten Zeitpunkt - erfolgt. Vorzugsweise wird hierbei in zur Bewegungsrichtung des Prozessortes in einer dazu senkrechten Richtung korrigiert. Aufgrund dessen ist es ferner vorteilhaft, wenn der Analysebereich senkrecht zur Bahn angeordnet ist und/oder die Bahnkorrekturwertbestimmung - d.h. die Bestimmung der Abweichung der Erwartungsposition des Referenzmerkmals von dessen tatsächlich über Bildverarbeitung ermittelter Position - senkrecht zur Bahn erfolgt.

Die Schnelligkeit und Erkennungsgenauigkeit kann bei der Analyse des Analysebereiches, insbesondere mittels einer Bildverarbeitung, dadurch erhöht werden, wenn der Analysebereich schräg, insbesondere orthogonal, zum Bewegungsvektor der Bahn analysiert wird. Diesbezüglich ist es insbesondere vorteilhaft, wenn der Analysebereich von einer parallel zum Bewegungsvektor ausgerichteten ersten Begrenzungslinie zu einer dazu gegenüberliegenden zweiten Begrenzungslinie analysiert wird.

Auch ist es vorteilhaft, wenn ein Abstand des Analysebereiches vom Prozessort in Abhängigkeit der offline vorbestimmten und/oder der online ermittelten Vorlaufgeschwindigkeit des Laserstrahls dynamisch angepasst wird. Demnach kann beispielsweise bei einer sehr schnellen Vorlaufgeschwindigkeit der Abstand des Analysebereiches zum Prozessort erhöht werden, um für die Bildverarbeitung bzw. für die Analyse des Analysebereiches ausreichend viel Zeit zur Verfügung zu haben. Andererseits kann bei niedriger Vorlaufgeschwindigkeit der Abstand des Analysebereiches zum Prozessort reduziert werden, wodurch Ungenauigkeiten bei der Nachregelung der Bahn verringert werden.

Vorteilhaft ist es, wenn die Soll-Position der Bahn unmittelbar anhand der Position zumindest eines ersten Referenzmerkmals des Werkstücks bestimmt wird. Hierbei kann das Referenzmerkmals beispielsweise ein Überlappungsstoß zweier miteinander über eine Kehlnaht zu verbindender Bauteile sein, wobei ein oberes Bauteil zumindest teilweise überlappend auf ein unteres Bauteil aufgelegt und die Schweißnaht zwischen wenigstens einer Kantenfläche bzw. Flankenfläche des oberen Bauteils und der angrenzenden Auflagefläche des unteren Bauteils ausgebildet wird. Die Kante zwischen den beiden Bauteilen bildet demnach das Referenzmerkmal, das die unmittelbare Soll-Position der Bahn definiert.

Zusätzlich oder alternativ kann die Soll-Position der Bahn aber auch mittelbar über einen Offset zur Position zumindest eines zweiten Referenzmerkmals des Werkstücks bestimmt werden. So kann beispielsweise die Soll-Position der Bahn in einem bestimmten Abstand zu einer Kante liegen, wobei zunächst das zweite Referenzmerkmals des Werkstücks, nämlich die Kante, ermittelt wird und über den ebenfalls bekannten Offset die Soll-Position der Bahn bestimmt wird. Als erstes und/oder zweites Referenzmerkmal kann jegliches körperliches Merkmal des Werkstücks, insbesondere eine Kannte, eine Ecke, eine Nut, eine Rippe, eine Rundung, ein Befestigungsmittel, eine Fläche, usw., dienen.

In einer vorteilhaften Weiterbildung der Erfindung nimmt das optische Erfassungssystem, insbesondere ein optischer Sensor, den Erfassungsbereich, insbesondere weg- und/oder zeitabhängig, als 2D- und/oder 3D-Bild auf. Der optische Sensor ist vorzugsweise eine 2D- oder 3D-Kamera. Hierdurch kann vorteilhafterweise mittels einer Bildverarbeitungssoftware der Analysebereich zur Identifikation des Referenzmerkmals analysiert werden.

Auch ist es vorteilhaft, wenn das optische Erfassungssystem derart mit dem Strahlleitsystem mitgeführt wird, dass sich der auf das Werkstück auftreffende Laserstrahl stets an einer festgelegten, insbesondere zentrischen, Position im Erfassungsbereich befindet.

Des Weiteren ist es vorteilhaft, wenn der Sensorpunkt des Punkt-Abstandssensors auf einer geschlossenen und/oder gebogenen, insbesondere kreis- oder ellipsenförmigen, Analysebahn, insbesondere zyklisch, um den Prozessort geführt wird. Dies kann beispielsweise durch einen Sensor-Scannerspiegel erfolgen.

Diesbezüglich ist es ferner vorteilhaft, wenn ein erster Analysebereich im Vorlauf des Prozessortes zur Genauigkeitsverbesserung und/oder eine zweiter Analysebereich im Nachlauf des Prozessortes zur Qualitätsüberprüfung bestimmt wird.

Wenn der linienförmige Analysebereich beim Punkt-Abstandssensor orthogonal zum Bewegungsvektor der Bahn verläuft, können die Daten aufgrund der Vorschubgeschwindigkeit nicht sauber in einer Linie erfasst werden. Um den durch die Vorwärtsbewegung des Prozessortes erzeugten Fehler zu kompensieren ist es deshalb vorteilhaft, wenn der Sensorpunkt innerhalb des Analysebereiches in Abhängigkeit der Vorschubgeschwindigkeit des Prozessortes derart schräg zum Bewegungsvektor der Bahn bewegt wird, dass eine gerade und/oder zur Bahn orthogonale Datenerfassungslinie erfasst wird.

Vorgeschlagen wird eine Vorrichtung zum Schweißen oder Schneiden von zumindest einem Werkstück mittels eines Lasers. Die Vorrichtung umfasst einen in Abhängigkeit einer zu schweißenden oder schneidenden Bahn des Laserstrahls programmierbaren Manipulator, insbesondere einen Industrieroboter, ein zum Ablenken des Laserstrahls geeignetes Strahlleitsystem, das zum Datenaustausch mit dem Manipulator verbunden ist, und ein mit dem Strahlleitsystem, insbesondere mit dessen Steuereinrichtung, zum Datenaustausch verbundenes optisches Erfassungssystem. Das optische Erfassungssystem umfasst einen Sensor, nämlich einen Punkt-Abstandssensor, mit einem Erfassungsbereich sowie eine Bildauswerteeinrichtung. Die Bildauswerteeinrichtung des optischen Erfassungssystems ist derart ausgebildet, dass mittels dieser die Position zumindest eines Referenzmerkmals in einem Analysebereich, der einen Teilausschnitt des Erfassungsbereiches bildet, ermittelbar ist. Des Weiteren ist die Bildauswerteeinrichtung derart ausgebildet, dass mittels ihr anhand der ermittelten Position des Referenzmerkmals eine Soll-Position der Bahn bestimmbar, eine zuvor offline festgelegte Näherungsposition der Bahn mit der Soll-Position vergleichbar und bei Positionsabweichungen die Bahn nachregelbar ist. Hierfür korrespondiert das optische Erfassungssystem insbesondere mit einer Steuereinheit des Manipulators und/oder des Strahlleitsystems.

Das optische Erfassungssystem ist derart ausgebildet, dass mittels diesem zur Erhöhung der Fehlerrobustheit die Größe, Position und/oder Orientierung des Analysebereiches innerhalb des Erfassungsbereiches, insbesondere in Abhängigkeit von zumindest einem die Position des Referenzmerkmals innerhalb des Erfassungsbereiches näherungsweise bestimmenden offline Parameters und/oder beeinflussenden Onlineparameters, dynamisch anpassbar ist. Hierdurch kann sichergestellt werden, dass sich das Referenzmerkmal bei einer überlagerten Bewegung des Manipulators und des Strahlleitsystems nicht aus dem Analysebereich bewegt, so dass eine im Wesentlichen kontinuierliche Genauigkeitsverbesserung während des Onlinebetriebes erfolgen kann.

Der Sensor ist ein Punkt-Abstandssensor, mittels dem der Erfassungsbereich über einen, insbesondere mittels zumindest einen drehbaren Spiegels, bewegbaren Sensorpunkt innerhalb eines Zeitfensters punktuell abtastbar ist.

Vorteilhaft ist es, wenn die optische Erfassungseinheit, insbesondere deren Bildauswerteeinrichtung, gemäß der vorangegangenen Beschreibung ausgebildet ist, wobei die genannten Merkmale einzeln oder in beliebiger Kombination vorhanden sein können.

Des Weiteren ist es vorteilhaft, wenn das optische Erfassungssystem, insbesondere mittels eines Strahlteilers, in den Strahlengang des Strahlleitsystems eingekoppelt ist. Hierdurch kann sichergestellt werden, dass der Prozessort im Erfassungsbereich stets an der gleichen Position ist.

In einer vorteilhaften Weiterbildung der Erfindung ist das Strahlleitsystem ortsfest angeordnet und das Werkstück gegenüber diesem mittels des Manipulators bewegbar. Alternativ ist es ebenso denkbar, dass das Werkstück ortsfest angeordnet ist und das Strahlleitsystem gegenüber diesem mittels des Manipulators bewegbar ist. Das Strahlleitsystem ist demnach an einem bewegbaren Ende, insbesondere einem Roboterarm, des Manipulators angeordnet und lenkt den Laserstrahl über mehrere sich relativ dazu bewegende Spiegel auf das Werkstück ab.

Weitere Vorteile der Erfindung sind in den nachfolgenden Ausführungsbeispielen beschrieben. Es zeigt:
- **Figur 1**: eine schematische Darstellung einer Vorrichtung zum Schweißen oder Schneiden von zumindest einem Werkstück mittels eines Lasers,
- **Figur 2a - 2d**: eine Draufsicht auf einen Erfassungsbereich eines Bildsensors eines optischen Erfassungssystems mit einem einen Teilausschnitt bildenden Analysebereich in den unterschiedlichen Phasen seiner dynamischen Anpassung und
- **Figur 3**: eine Draufsicht auf einen Erfassungsbereich eines PunktAbstandssensors eines optischen Erfassungssystems mit zwei jeweils einen Teilausschnitt bildenden Analysebereichen.

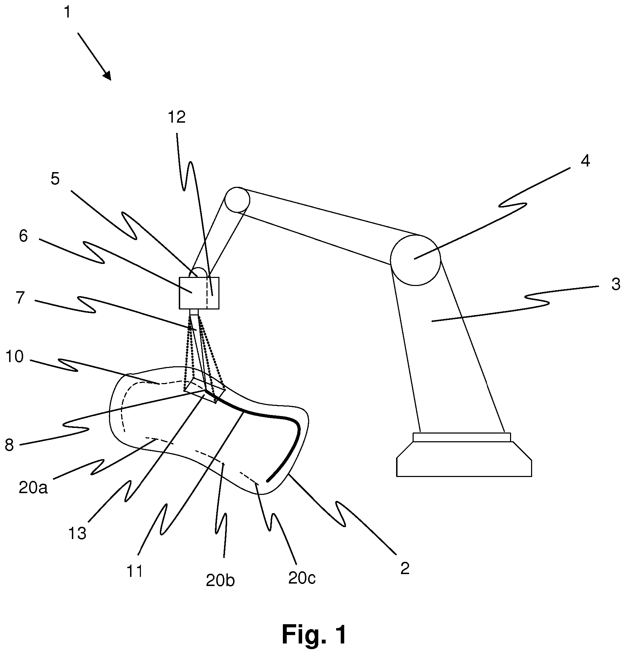

Figur 1 zeigt eine schematische Darstellung einer Vorrichtung 1 zum Schweißen oder Schneiden von zumindest einem Werkstück 2. Die Vorrichtung 1 umfasst einen Manipulator 3, der im vorliegenden Ausführungsbeispiel als Industrieroboter ausgebildet ist. Der Industrieroboter weist mehrere Gelenke 4 auf, über die sein freies Ende 5 in eine Vielzahl von Positionen verfahrbar ist. Im Bereich des freien Endes 5 des Manipulators 3 ist ein Strahlleitsystem 6 angeordnet. Das Strahlleitsystem 6 umfasst mehrere in Figur 1 nicht im Detail dargestellte bewegliche und/oder über einen Spiegelantrieb angetriebene Spiegel und/oder Linsen zur gezielten Ablenkung und Fokussierung eines Laserstrahls 7. Der Laserstrahl 7 wird somit durch eine zusätzliche Spiegelbewegung relativ gegenüber dem freien Ende 5 des Manipulators 3 abgelenkt. Die Position des Prozessortes 8 auf dem Werkstück 2 resultiert demnach aus einer überlagerten Bewegung des Manipulators 3 und des Strahlleitsystems 6. Hierbei ist das Strahlleitsystem 6 stets beabstandet zum Werkstück 2 positioniert.

Gemäß Figur 1 wird der Laserstrahl 7 entlang einer zu schneidenden oder schweißenden Bahn 10 geführt, wobei dem Prozessort 8 nachgelagert eine Schweißnaht 11 ausgebildet wird. Die Schweißnaht 11 kann auch zusätzlich oder alternativ mehrere Steppnähte 20a, 20b, 20c umfassen. Alternativ kann die Schweißnaht 11 auch als Trennschnitt ausgebildet sein.

Des Weiteren umfasst die Vorrichtung 1 ein optisches Erfassungssystem 12. Das optische Erfassungssystem 12 umfasst einen in Figur 1 nicht näher spezifizierten Sensor, mittels dem ein Erfassungsbereich 13 erfassbar ist. Das optische Erfassungssystem 12 ist mittels eines in Figur 1 nicht dargestellten Strahlteilers in den Strahlengang des Strahlleitsystems 6 eingekoppelt. Hierdurch befindet sich der Prozessort 8 im Erfassungsbereich 13 stets an der gleichen Position.

Der Erfassungsbereich 13 wird mittels einer in Figur 1 nicht mehr dargestellten Bildauswerteeinrichtung zur Genauigkeitsverbesserung der Schweißnahtpositionierung analysiert. Das optische Erfassungssystem 12 ist zum Datenaustausch mit dem Manipulator 3, insbesondere einer hier nicht dargestellten Robotersteuerung, und dem Strahlleitsystem 6, insbesondere einer hier nicht dargestellten Steuerung des Strahlleitsystems, verbunden.

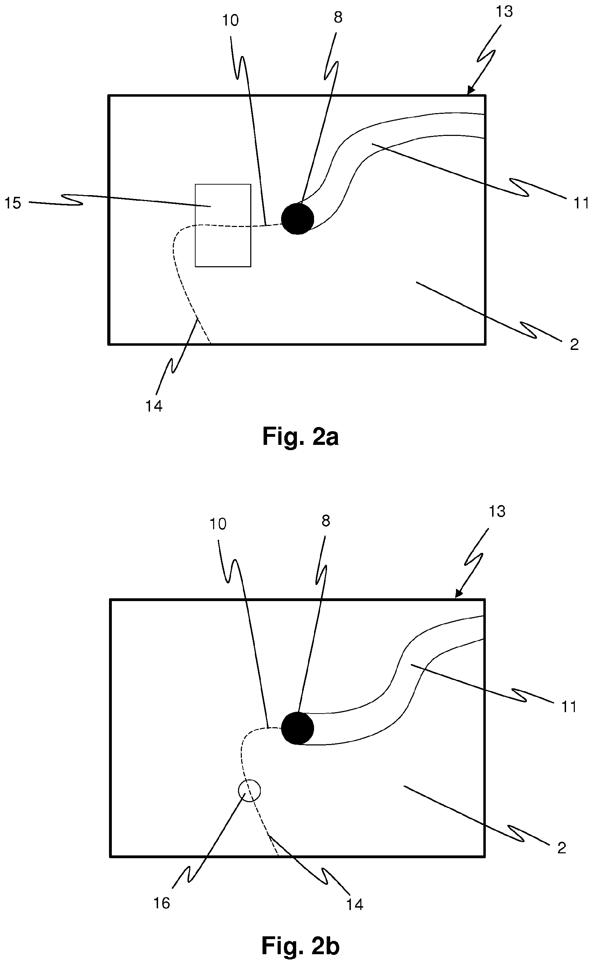

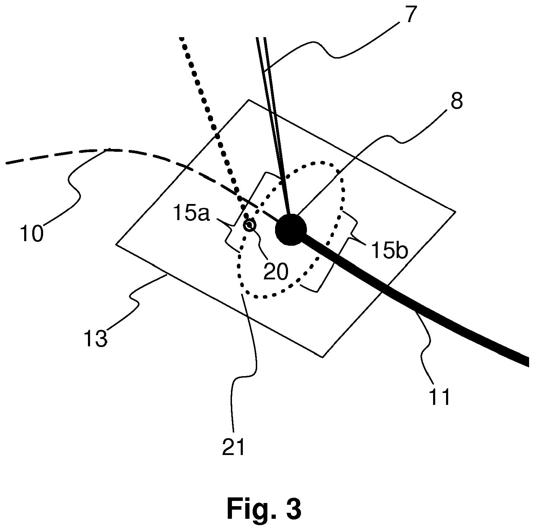

Figur 2a zeigt den vom optischen Erfassungssystem 12 erfassten Erfassungsbereich 13. Unter der Begrifflichkeit "Erfassungsbereich" ist derjenige Bereich zu verstehen, innerhalb dessen sensorisch Daten erfasst werden können. Die Daten müssen nicht zwangsläufig in dem gesamten Erfassungsbereich gleichzeitig erfassbar sein. So ist es ebenso auch denkbar, dass der gesamte Erfassungsbereich innerhalb eines Zeitfensters sensorisch abgetastet wird. Demnach wäre der gesamte Erfassungsbereich beispielsweise bei einem als Bildsensor ausgebildeten Sensor vollständig zu einem einzigen Zeitpunkt, bzw. frameweise, erfassbar. Erfindungsgemäß ist der Sensor gemäß Figur 3 als bewegbarer Punkt-Abstandssensor ausgebildet. Ein Sensorpunkt 20 des Punkt-Abstandssensors, in dem zu einem konkreten Zeitpunkt Daten erfasst werden können, würde dann innerhalb des Erfassungsbereiches 13 bewegbar sein. Der Erfassungsbereich 13 würde somit den maximalen Auslenkbereich des, insbesondere über einen drehbaren Spiegel, beweglichen Punkt-Abstandssensors darstellen.

In dem Erfassungsbereich 13 ist der Prozessort 8 zu erkennen, in dem der Laserstrahl 7 einwirkt. Der Laserstrahl 7 bzw. der Prozessort 8 wird in Abhängigkeit von Bewegungsdaten des Manipulators 3 und des Strahlleitsystems 6 entlang der Bahn 10 geführt. Hierdurch wird die dem Prozessort 8 nachgelagerte Schweißnaht 11 ausgebildet.

Zur Bestimmung der zu schweißenden oder schneidenden Bahn 10 wird vor der Ausführung des Schweiß- oder Schneidprozesses (offline) eine Näherungsposition 14 der Bahn 10 festgelegt. Zur Bestimmung der Näherungsposition 14 der Bahn werden Geometriedaten eines hier nicht dargestellten Referenzwerkstücks herangezogen. Diese Geometriedaten können CAD-basiert sein oder aber auch durch das Vermessen des Referenzwerkstücks ermittelt werden. Ferner ist auch eine Teach-In-Programmierung denkbar. In Abhängigkeit dieser Geometriedaten kann die Näherungsposition 14 der Bahn festgelegt werden. Anhand der Näherungsposition 14 der Bahn können wiederum die Bewegungsdaten des Manipulators 3 und des Strahlleitsystems 6 näherungsweise bestimmt werden.

Da jedoch die Geometriedaten des nun tatsächlich zu schweißenden oder schneidenden Werkstücks 3, beispielsweise aufgrund von Fertigungstoleranzen, von den Geometriedaten des hier nicht dargestellten Referenzwerkstücks abweichen können, kann die Näherungsposition 14 der Bahn sowie die offline näherungsweise bestimmten Bewegungsdaten des Manipulators 3 und des Strahlleitsystems 6 nicht exakt genug sein. Aufgrund dessen weist der Erfassungsbereich 13 einen Analysebereich 15 auf. Um die Auswertegeschwindigkeit zu erhöhen, stellt der Analysebereich 15 nur einen Teilausschnitt des Erfassungsbereiches 13 dar. Hierdurch müssen beispielsweise im Falle eines nicht erfindungsgemäßen Bildsensors, insbesondere einer Kamera, nur die Pixel oder Messwerte in dem Analysebereich 15 analysiert werden. Der Erfassungsbereich 13 würde demnach der Bildweite der Kamera bzw. des Bildsensors entsprechen. Zur Analyse würde jedoch ausschließlich der flächenreduzierte Analysebereich 15 herangezogen werden.

Bei einem nicht dargestellten erfindungsgemäßen Punkt-Abstandssensor würde der Erfassungsbereich 15 dem maximalen Bewegungsbereich des Punkt-Abstandssensors entsprechen. Der Erfassungsbereich 15 würde somit denjenigen Bereich definieren, in dem ein Sensorpunkt - d.h. ein punktueller Datenerfassungsbereich des Punkt-Abstandssensors - durch optische und/oder mechanische Mittel bewegt werden kann. Dies könnte beispielsweise über einen Sensor-Scanner erfolgen. Dieser würde dann zumindest einen drehbaren Sensor-Scannerspiegel aufweisen, mittels dem der Sensorpunkt innerhalb des Erfassungsbereiches 15 bewegt werden könnte. Der Analysebereich würde in diesem Fall dann durch denjenigen Bereich gebildet sein, innerhalb von dem der Sensorpunkt tatsächlich bewegt wird. Bei einem Punkt-Abstandssensor ist der Analysebereich vorzugsweise linienförmig ausgebildet. Die Linie kann gerade oder aber auch gekrümmt sein. Vorzugsweise zirkelt der Sensorpunt zyklisch um den Prozessort 8 herum, wobei nur in einem dem Prozessort vorgelagerten ersten Analysebereich und/oder in einem dem Prozessort 8 nachgelagerten zweiten Analysebereich Daten ausgewertet werden.

Der in den Figuren dargestellt Analysebereich 15 entspricht vorzugsweise dem eines nicht erfindungsgemäßen Bildsensors. Der Analysebereich 15 ist in Bezug auf die zu schweißende Bahn 10 dem Prozessort 8 vorgelagert. Durch die hier nicht dargestellte Bildauswerteeinrichtung wird der Analysebereich 15, wie nachfolgend näher erläutert, derart analysiert, dass mittels der hieraus gewonnenen Ergebnisse die offline vorbestimmten Bewegungsdaten des Strahlleitsystems 6 und/oder des Manipulators 3 derart anpassbar sind, dass sich die Schweißnaht 11 exakt an der gewünschten Idealposition befindet.

Aufgrund der überlagerten Bewegungen des Manipulators 3 und des Strahlleitsystems 6 war die Anwendung eines vorlaufenden pixelreduzierten Analysebereiches 15 bislang problematisch, da sich die Position der Bahn 10 aufgrund der zusätzlichen Relativablenkung durch das Strahlleitsystem 6 innerhalb des Erfassungsbereiches 13 derart verändert, dass es aus einem statisch ausgebildeten Analysebereich 15 stets herausrutschen würde.

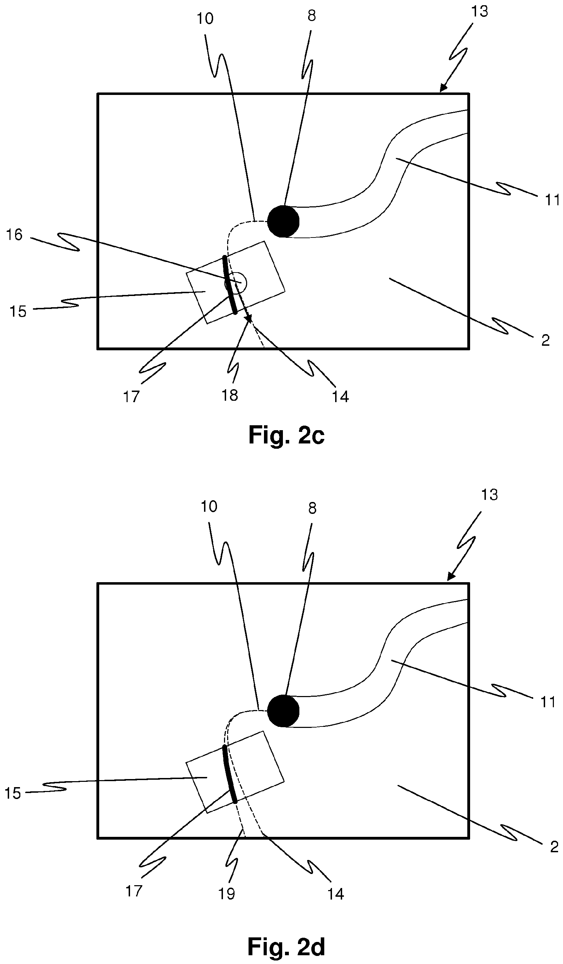

Zur Vermeidung dieses Fehlers bzw. zur Erhöhung der Fehlerrobustheit des Systems wird deshalb mittels des optischen Erfassungssystems 12 die Größe, Position und/oder Orientierung des Analysebereiches 15 innerhalb des Erfassungsbereiches 13 dynamisch angepasst. In den Figuren 2a und 2d ist der Analysebereich 15 exemplarisch in zwei gegenüber dem Erfassungsbereich 13 unterschiedlichen Positionen sowie Orientierungen dargestellt. Die dynamische Anpassung des Analysebereiches 15 erfolgt anhand von Offlineparametern, die bereits vor Prozessbeginn ermittelt und/oder näherungsweise festgelegt wurden. Des Weiteren erfolgt die Anpassung anhand von Onlineparametern, die während des Prozesses, d.h. online, die Position und/oder Orientierung des Analysebereiches 15 relativ zum Erfassungsbereich 13 beeinflussen.

Um den in Figur 2a in seiner ersten Position und Orientierung dargestellten Analysebereich 15 dynamisch auf seine in Figur 2d dargestellte zweite Position und/oder Orientierung dynamisch anzupassen, wird gemäß Figur 2b innerhalb des Erfassungsbereiches 13 zunächst ein Erwartungsbereich 16 definiert, innerhalb dessen die Position eines Referenzmerkmals 17 vermutet wird. Die Position des Erwartungsbereiches 16 kann hierbei insbesondere in Abhängigkeit von zumindest einem die Position des Referenzmerkmals 17 innerhalb des Erfassungsbereiches 13 näherungsweise bestimmenden Offlineparameters und/oder beeinflussenden Onlineparameters bestimmt werden. Demnach wird zur Positionsfestlegung des Erwartungsbereiches 16 gemäß Figur 2b beispielsweise die Näherungsposition 14 der Bahn verwendet. Die Näherungsposition 14 der Bahn innerhalb des Erfassungsbereiches 13 ist insbesondere von den Geometriedaten des Referenzwerkstücks, und von den offline näherungsweise festgelegten sowie online korrigierten Bewegungsdaten des Manipulators 3 und/oder des Strahlleitsystems 6 abhängig.

Gemäß Figur 2c wird in einem nachfolgenden Schritt die Position und die Orientierung des Analysebereiches 15 derart angepasst, dass dieser den Erwartungsbereich 16, insbesondere zentrisch, beinhaltet. Des Weiteren wird die Orientierung der Analysebereiches 15 in Abhängigkeit eines, insbesondere zu erwartenden, Bewegungsvektor 18 angepasst. Anschließend wird der Analysebereich 15 mittels einer Bildverarbeitungssoftware zur Ermittlung des Referenzmerkmals 17 analysiert.

Das Referenzmerkmal 17 dient dazu gemäß Figur 2d eine Soll-Position 19 der Bahn zu bestimmen. Anschließend wird die Näherungsposition 14 der Bahn mit der Soll-Position 19 der Bahn verglichen und - wie auch bei dem in Figur 2d dargestellten Beispiel - bei Positionsabweichungen die Bahn 10 auf die Soll-Position 19 nachgeregelt. Hierdurch kann die Genauigkeit des Schweißprozesses während des Onlinebetriebes verbessert werden.

Zusammenfassend ist somit festzustellen, dass eine Verrechnung der gewonnen Bahnkorrekturwerte ohne Wissen um die Sollposition der Bahn und der Erwartungsposition des Referenzmerkmals nicht möglich wäre.

Figur 3 zeigt einen erfindungsgemäßen Punkt-Abstandssensor, der in einem Sensorpunkt 20 Daten erfassen kann. Der Sensorpunkt 20 kann über optische Ablenkmittel, insbesondere einen Sensor-Scannerspiegel, innerhalb des Erfassungsbereiches 13 bewegt werden. Der Erfassungsbereich 13 bildet somit denjenigen Bereich in dem der Punkt-Abstandssensor mittels seines Sensorpunktes 20 Daten erfassen könnte. Tatsächlich fährt der Punkt-Anstandssensor mit seinem Sensorpunkt 20 jedoch nicht den gesamten Erfassungsbereich 13 ab. Stattdessen wird dieser nur über einen Teilbereich des Erfassungsbereiches 13 bewegt. Vorliegend ist dieser Teilbereich durch eine Analysebahn 21 gebildet. Die Analysebahn 21 bzw. -linie ist geschlossen und/oder gebogenen, insbesondere kreis- oder ellipsenförmigen, ausgebildet. Der Sensorpunkt 20 wird zyklisch auf dieser Analysebahn 21 um den Prozessort 8 geführt. Vorliegend werden zwei Analysebereiche 15a, 15b der Analysebahn 21 ausgewertet. Der erste Analysebereich 15a ist im Vorlauf des Prozessortes 8 zur Genauigkeitsverbesserung und der zweite Analysebereich ist im Nachlauf des Prozessortes 8 zur Qualitätsüberprüfung positioniert. Die Position, Orientierung und/oder Größe der Analysebereiche 15a, 15b wird gemäß der zum ersten Ausführungsbeispiel erläuterten Regelung angepasst.

Beim vorliegenden Punkt-Abstandssensor stellt
- der Erfassungsbereich 13 denjenigen Bereich dar, in dem mittels des Sensorpunktes 20 Daten erfasst werden könnten,
- die Analysebahn 21 denjenigen Teilbereich des Erfassungsbereiches 13 dar, in dem tatsächlich Daten erfasst werden, und
- der zumindest eine Analysebereich 15a, 15b denjenigen Teilbereich des Erfassungsbereiches 13 und/oder des Analysebereiches 21 dar, in dem die erfassten Daten tatsächlich analysiert und/oder zur Regelung herangezogen werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

1. Vorrichtung
2. Werkstück
3. Manipulator
4. Gelenke
5. freies Ende
6. Strahlleitsystem
7. Laserstrahl
8. Prozessort
9. Bewegungsvektor
10. Bahn
11. Schweißnaht
12. optisches Erfassungssystem
13. Erfassungsbereich
14. Näherungsposition der Bahn
15.Analysebereich
16. Erwartungsbereich
17. Referenzmerkmal
18. Bewegungsvektor
19. Soll-Position der Bahn
20. Sensorpunkt
21. Analysebahn

## Patentansprüche

1. Verfahren zum Schweißen oder Schneiden von zumindest einem Werkstück (2) mittels eines Lasers,
bei welchem ein Laserstrahl (7) in Abhängigkeit von Bewegungsdaten eines Manipulators (3) und
eines vom Werkstück (2) beabstandeten Strahlleitsystems (6) entlang einer zu schweißenden oder schneidenden Bahn (10) geführt wird, wobei zuvor offline eine Näherungsposition (14) der Bahn festgelegt wird,
online zur Genauigkeitsverbesserung mittels eines optischen Erfassungssystems (12) zumindest die Position eines Referenzmerkmals (17) des Werkstücks (2) in einem Analysebereich (15), der zur Erhöhung der Auswertungsgeschwindigkeit einen Teilausschnitt eines Erfassungsbereiches (13) des Erfassungssystems (12) bildet, ermittelt wird,
anhand der Position des Referenzmerkmals (17) eine Soll-Position (19) der Bahn bestimmt wird,
die Näherungsposition (14) mit der Soll-Position (19) der Bahn verglichen wird und
die Bahn (10) mit Positionsabweichungen nachgeregelt wird,
**dadurch gekennzeichnet,**
**dass** der Erfassungsbereich (13) derjenige Bereich ist, den ein Punkt-Abstandssensor des optischen Erfassungssystems (12) mittels eines bewegbaren Sensorpunktes (20) innerhalb eines Zeitfensters punktuell abtasten kann,
wobei der Sensorpunkt (20) ein punktueller Datenerfassungsbereich des Punkt-Abstandssensors ist, in dem der Punkt-Abstandssensor Daten erfassen kann und
**dass** der Sensorpunkt (20) innerhalb des Erfassungsbereiches (13) bewegt wird,
**dass** der Sensorpunkt (20) nur über einen durch eine Analysebahn (21) gebildeten Teilbereich des Erfassungsbereiches bewegt wird und
**dass** zur Erhöhung der Fehlerrobustheit mittels des optischen Erfassungssystems (12) die Größe, Position und/oder Orientierung des Analysebereiches (15) innerhalb des Erfassungsbereiches (13) in Abhängigkeit von zumindest einem die Position des Referenzmerkmals (17) innerhalb des Erfassungsbereiches (13) näherungsweise bestimmenden Offlineparameters und/oder beeinflussenden Onlineparameters dynamisch angepasst wird.

2. Verfahren nach dem vorherigen Anspruch, **dadurch gekennzeichnet, dass** der Analysebereich (15) in Abhängigkeit von offline ermittelten und/oder abgespeicherten Geometriedaten eines Referenzwerkstücks angepasst wird.

3. Verfahren nach einem der vorherigen Ansprüche,
**dadurch gekennzeichnet, dass** die dynamische Anpassung des Analysebereiches (15) in Abhängigkeit von Bahn-Positionsdaten, insbesondere der Näherungsposition (14), der Soll-Position (19) und/oder der nachgeregelten Bahnposition, erfolgt.

4. Verfahren nach einem der vorherigen Ansprüche,
**dadurch gekennzeichnet, dass** die dynamische Anpassung des Analysebereiches (15) in Abhängigkeit der aktuellen und/oder der innerhalb eines bestimmten Zeitfensters zu erwartenden Position und/oder Orientierung des Manipulators (3) und/oder des Strahlleitsystems (6), insbesondere zumindest eines Spiegels, erfolgt.

5. Verfahren nach einem der vorherigen Ansprüche,
**dadurch gekennzeichnet, dass** die aktuelle und/oder die innerhalb eines bestimmten Zeitfensters zu erwartende Position und/oder Orientierung des Manipulators (3) und/oder des Strahlleitsystems (6) anhand der offline vorbestimmten und/oder abgespeicherten Bewegungsdaten zumindest näherungsweise bestimmt wird und/oder online, insbesondere kontinuierlich oder in diskreten Zeitintervallen, ermittelt wird.

6. Verfahren nach einem der vorherigen Ansprüche,
**dadurch gekennzeichnet, dass** innerhalb des Erfassungsbereiches (13), insbesondere mittels zumindest eines Online- und/oder Offlineparameters, zumindest ein Erwartungsbereich (13) der Position des Referenzmerkmals (17) und/oder der Soll-Position (19) der Bahn bestimmt wird.

7. Verfahren nach einem der vorherigen Ansprüche, **dadurch gekennzeichnet, dass** der, insbesondere als Linie ausgebildete, Analysebereich (15) derart angepasst wird, dass dieser den Erwartungsbereich (16) beinhaltet.

8. Verfahren nach einem der vorherigen Ansprüche,
**dadurch gekennzeichnet, dass** der Sensorpunkt (20) des Punkt-Abstandssensors über zumindest einen drehbaren Spiegel bewegt wird.

9. Verfahren nach einem der vorherigen Ansprüche,
**dadurch gekennzeichnet, dass** der Sensorpunkt (20) des Punkt-Abstandssensors auf einer geschlossenen und/oder gebogenen, insbesondere kreis- oder ellipsenförmigen, Analysebahn (21), insbesondere zyklisch, um den Prozessort (8) geführt wird und/oder ein erster Analysebereich (15a) im Vorlauf des Prozessortes (8) und/oder ein zweiter Analysebereich (15b) im Nachlauf des Prozessortes (8) bestimmt wird.

10. Verfahren nach einem der vorherigen Ansprüche,
**dadurch gekennzeichnet, dass** der Sensorpunkt (20) innerhalb des Analysebereiches (15a, 15b) in Abhängigkeit der Vorschubgeschwindigkeit des Prozessortes (8) derart schräg zum Bewegungsvektor (18) der Bahn (10) bewegt wird, dass eine gerade und/oder zur Bahn (10) orthogonale Datenerfassungslinie erfasst wird.

11. Vorrichtung (1) zum Schweißen oder Schneiden von zumindest einem Werkstück (2) mittels eines Lasers
mit einem in Abhängigkeit einer zu schweißenden oder schneidenden Bahn (10) des Laserstrahls programmierbaren Manipulator (3),
einem sich zum Ablenken des Laserstrahls geeigneten Strahlleitsystem (6), das zum Datenaustausch mit dem Manipulator (3) verbunden ist, und
einem mit dem Strahlleitsystem (6) zum Datenaustausch verbundenen optischen Erfassungssystem (12),
das einen Sensor mit einem Erfassungsbereich (13) und
eine Bildauswerteeinrichtung umfasst,
die derart ausgebildet ist,
dass mittels dieser die Position zumindest eines Referenzmerkmals (17) in einem Analysebereich (15), der einen Teilausschnitt des Erfassungsbereiches (13) bildet, ermittelbar,
anhand der Position des Referenzmerkmals (17) eine Soll-Position (19) der Bahn bestimmbar,
eine zuvor offline festgelegte Näherungsposition (14) der Bahn mit der Soll-Position (19) vergleichbar und
die Bahn (10) mit Positionsabweichungen nachregelbar ist,
**dadurch gekennzeichnet,**
**dass** der Sensor ein Punkt-Abstandssensor ist,
der einen Sensorpunkt (20) aufweist, der ein punktueller Datenerfassungsbereich des Punkt-Abstandssensors ist, in dem der Punkt-Abstandssensor Daten erfassen kann,
**dass** der Sensorpunkt (20) innerhalb des Erfassungsbereiches bewegbar ist,
**dass** der Erfassungsbereich über den bewegbaren Sensorpunkt (20) innerhalb eines Zeitfensters punktuell abtastbar ist, und
**dass** das optische Erfassungssystem (12) derart ausgebildet ist, dass mittels diesem zur Erhöhung der Fehlerrobustheit die Größe, Position und/oder Orientierung des Analysebereiches (15) innerhalb des Erfassungsbereiches (13) in Abhängigkeit von zumindest einem die Position des Referenzmerkmals (17) innerhalb des Erfassungsbereiches (13) näherungsweise bestimmenden Offlineparameters und/oder beeinflussenden Onlineparameters dynamisch anpassbar ist.

12. Vorrichtung nach dem vorherigen Anspruch, **dadurch gekennzeichnet, dass** das optische Erfassungssystem (12) nach einem oder mehreren der vorherigen Ansprüche ausgebildet ist.

13. Vorrichtung nach einem der vorherigen Ansprüche,
**dadurch gekennzeichnet, dass** das optische Erfassungssystem (12), insbesondere mittels eines Strahlteilers, in den Strahlengang des Strahlleitsystems (6) eingekoppelt ist.

14. Vorrichtung nach einem der vorherigen Ansprüche,
**dadurch gekennzeichnet, dass** mittels des Punkt-Abstandssensors der Erfassungsbereich über einen mittels zumindest einen drehbaren Spiegels bewegbaren Sensorpunkt (20) innerhalb eines Zeitfensters punktuell abtastbar ist.

## Claims

1. A method for welding or cutting at least one workpiece (2) by means of a laser,
a laser beam (7) being guided as a function of motion data of a manipulator (3) and
of a beam guiding system (6) spaced apart from the workpiece (2) along a path (10) for welding or cutting,
an approximate position (14) of the path being previously defined offline,
at least the position of a reference feature (17) of the workpiece (2) being determined online for improving precision by means of an optical capturing system (12) in an analysis region (15) forming a partial segment of a capturing region (13) of the capturing system (12) for increasing the analysis speed,
a target position (19) of the path being determined by means of the position of the reference feature (17),
the approximate position (14) being compared with the target position (19) of the path, and
the path (10) being corrected by means of position deviations,
**characterized in that**
the capturing region (13) is such region that a point distance sensor of the optical capturing system (12) can probe in a selectively manner within a time period by means of a displaceable sensor point (20), wherein the sensor point (20) is a selectively data capturing region of the point distance sensor wherein the point distance sensor can capture data, and
that the sensor point (20) is displaced within the capturing region (13), that the sensor point (20) is displaced only over a partial region of the capturing region formed by an analysis path (21),
and
that the size, position, and/or orientation of the analysis region (15) within the capturing region (13) is dynamically adjusted by means of the optical capturing system (12) as a function of at least one offline parameter approximating the position of the reference feature (17) within the capturing region (13) and/or online parameter influencing said position for increasing the error robustness.

2. The method according to the preceding claim, **characterized in that** the analysis region (15) is adjusted as a function of geometry data of a reference workpiece determined offline and/or saved.

3. The method according to any one of the preceding claims, **characterized in that** the dynamic adjusting of the analysis region (15) is performed as a function of path position data, particularly the approximate position (14), the target position (19), and/or the corrected path position.

4. The method according to any one of the preceding claims, **characterized in that** the dynamic adjusting of the analysis region (15) is performed as a function of the position and/or orientation of the manipulator (3) and/or of the beam guiding system (6), particularly of at least one mirror, at the current time and/or expected within a particular time period.

5. The method according to any one of the preceding claims, **characterized in that** the position and/or orientation of the manipulator (3) and/or of the beam guiding system (6) at the current time and/or expected within a particular time period is at least approximately determined using the motion data predetermined offline and/or saved, and/or is determined online, particularly continuously or at discrete time intervals.

6. The method according to any one of the preceding claims, **characterized in that** at least one expected region (13) of the position of the reference feature (17) and/or of the target position (19) of the path is determined within the capturing region (13), particularly by means of at least one online and/or offline parameter.

7. The method according to any one of the preceding claims, **characterized in that** the analysis region (15), particularly implemented as a line, is adjusted such that said region comprises the expected region (16).

8. The method according to any one of the preceding claims, **characterized in that** the sensor point (20) of the point distance sensor is displaced by means of at least one rotatable mirror.

9. The method according to any one of the preceding claims, **characterized in that** the sensor point (20) of the point distance sensor is guided on a closed and/or curved, particularly circular or ellipsoid, analysis path (21), particularly cyclically, about the process location (8), and/or a first analysis region (15a) is determined ahead of the process location (8) and/or a second analysis region (15b) is determined behind the process location (8).

10. The method according to any one of the preceding claims, **characterized in that** the sensor point (20) is displaced within the analysis region (15a, 15b) as a function of the feed speed of the process location (8) at an angle to the motion vector (18) of the path (10), such that a data acquisition line is captured in a straight line and/or orthogonal to the path (10).

11. A device (1) for welding or cutting at least one workpiece (2) by means of a laser,
having a manipulator (3) programmable as a function of a path (10) of the laser beam to be welded or cut,
a beam guiding system (6) suitable for deflecting the laser beam and connected to the manipulator (3) for exchanging data, and
an optical capturing system (12) connected to the beam guiding system (6) for exchanging data,
comprising a sensor having a capturing region (13) and
an image processing device,
implemented such that
by means thereof the position of at least one reference feature (17) in an analysis region (15) forming a partial segment of the capturing region (13) can be determined,
a target position (19) of the path can be determined by means of the position of the reference feature (17),
an approximate position (14) of the path previously determined offline can be compared with the target position (19), and
the path (10) can be corrected by means of position deviations,
**characterized in that**
the sensor is a point distance sensor
having a sensor point (20) as a selectively data capturing region of the point distance sensor wherein the point distance sensor can capture data, and
that the sensor point (20) is displaceable within the capturing region, that the capturing region can be probed in a selectively manner by means of the displaceable sensor point (20) within a time period, and that the optical capturing system (12) is implemented such that the size, position, and/or orientation of the analysis region (15) within the capturing region (13) can be dynamically adjusted by means thereof as a function of at least one offline parameter approximating the position of the reference feature (17) within the capturing region (13) and/or online parameter influencing said position for increasing the error robustness.

12. The device according to the preceding claim, **characterized in that** the optical capturing system (12) is implemented according to any one of the preceding claims.

13. The device according to any one of the preceding claims, **characterized in that** the optical capturing system (12) is coupled into the beam path of the beam guiding system (6), particularly by means of a beam splitter.

14. The device according to any one of the preceding claims, **characterized in that** the capturing region can be probed in a selectively manner within a time period by means of the point distance sensor using a sensor point (20) displaceable by means of at least one rotatable mirror.

## Revendications

1. Procédé pour souder ou couper au moins une pièce à usiner (2) au moyen d'un laser,
dans lequel un faisceau laser (7) est guidé en fonction de données de mouvement d'un manipulateur (3) et
d'un système de guidage (6) de faisceau distant de la pièce à usiner (2) le long d'une trajectoire (10) à souder ou à couper,
une position de proximité (14) de la trajectoire étant au préalable déterminée hors ligne,
afin d'améliorer la précision, au moins la position d'une caractéristique de référence (17) de la pièce à usiner (2) est déterminée en ligne au moyen d'un système de détection optique (12) dans une zone d'analyse (15) qui, pour augmenter la vitesse d'évaluation, forme une zone partielle d'une zone de détection (13) du système de détection (12),
une position nominale (19) de la trajectoire est déterminée sur la base de la position de la caractéristique de référence (17),
la position de proximité (14) est comparée à la position nominale (19) de la trajectoire et
la trajectoire (10) avec des écarts de position est réajustée, **caractérisé en ce que**
la zone de détection (13) est la zone qu'un capteur de distance point à point du système de détection optique (12) peut balayer ponctuellement à l'intérieur d'une fenêtre temporelle au moyen d'un point de capteur mobile (20),
le point de capteur (20) étant une zone de saisie de données ponctuelle du capteur de distance point à point dans laquelle le capteur de distance point à point peut saisir des données, et
**en ce que** le point de capteur (20) est déplacé au sein de la zone de détection (13),
**en ce que** le point de capteur (20) est déplacé exclusivement sur une zone partielle de la zone de détection formée par une trajectoire d'analyse (21)
et
**en ce que**, afin d'augmenter la robustesse aux erreurs, la taille, la position et/ou l'orientation de la zone d'analyse (15) à l'intérieur de la zone de détection (13) est/sont adaptée(s) dynamiquement au moyen du système de détection optique (12) en fonction d'au moins un paramètre hors ligne déterminant approximativement la position de la caractéristique de référence (17) à l'intérieur de la zone de détection (13) et/ou d'un paramètre en ligne influençant approximativement la position de la caractéristique de référence (17) à l'intérieur de la zone de détection (13).

2. Procédé selon la revendication précédente, **caractérisé en ce que** la zone d'analyse (15) est adaptée en fonction de données de géométrie d'une pièce de référence déterminées hors ligne et/ou enregistrées.

3. Procédé selon l'une quelconque des revendications précédentes, **caractérisé en ce que** l'adaptation dynamique de la zone d'analyse (15) est effectuée en fonction des données de position de la trajectoire, en particulier la position de proximité (14), la position nominale (19) et/ou la position de trajectoire réajustée.

4. Procédé selon l'une quelconque des revendications précédentes, **caractérisé en ce que** l'adaptation dynamique de la zone d'analyse (15) est effectuée en fonction de la position actuelle et/ou de la position prévisible dans une fenêtre temporelle déterminée et/ou de l'orientation du manipulateur (3) et/ou du système de guidage (6) de faisceau, en particulier d'au moins un miroir.

5. Procédé selon l'une quelconque des revendications précédentes, **caractérisé en ce que** la position actuelle et/ou la position prévisible dans une fenêtre temporelle déterminée et/ou l'orientation du manipulateur (3) et/ou du système de guidage (6) de faisceau est/sont déterminée(s) au moins approximativement sur la base des données de mouvement prédéterminées hors ligne et/ou enregistrées, et/ou sont déterminée(s) en ligne, en particulier de manière continue ou dans des intervalles de temps discontinus.

6. Procédé selon l'une quelconque des revendications précédentes, **caractérisé en ce que** dans la zone de détection (13), il est déterminé au moins une zone prévisionnelle (13) de la position de la caractéristique de référence (17) et/ou de la position nominale (19) de la trajectoire en particulier au moyen d'au moins un paramètre en ligne et/ou hors ligne.

7. Procédé selon l'une quelconque des revendications précédentes, **caractérisé en ce que** la zone d'analyse (15), qui se présente en particulier sous forme de ligne, est adaptée de telle manière qu'elle comprenne la zone prévisionnelle (16).

8. Procédé selon l'une quelconque des revendications précédentes, **caractérisé en ce que** le point de capteur (20) du capteur de distance point à point est déplacé via au moins un miroir rotatif.

9. Procédé selon l'une quelconque des revendications précédentes, **caractérisé en ce que** le point de capteur (20) du capteur de distance point à point est guidé, en particulier de manière cyclique, autour du lieu de processus (8) sur une trajectoire d'analyse (21) fermée et/ou curviligne, en particulier circulaire ou elliptique, et/ou une première zone d'analyse (15a) est déterminée en amont du lieu de processus (8) et/ou une deuxième zone d'analyse (15b) est déterminée en aval du lieu de processus (8).

10. Procédé selon l'une quelconque des revendications précédentes, **caractérisé en ce que** le point de capteur (20) est déplacé au sein de la zone d'analyse (15a, 15b) en fonction de la vitesse d'avance du lieu de processus (8), obliquement par rapport au vecteur de mouvement (18) de la trajectoire (10) de sorte qu'une ligne de saisie de données droite et/ou orthogonale à la trajectoire (10) soit saisie.

11. Dispositif (1) pour souder ou couper au moins une pièce à usiner (2) au moyen d'un laser,
avec un manipulateur (3) programmable en fonction d'une trajectoire (10) à souder ou à couper du faisceau laser,
un système de guidage (6) de faisceau adapté pour dévier le faisceau laser, qui est connecté au manipulateur (3) pour l'échange de données, et
un système de détection optique (12) connecté au système de guidage (6) de faisceau pour l'échange de données,
qui comprend un capteur avec une zone de détection (13) et
un dispositif d'analyse d'images,
qui se présente sous une forme telle
qu'à l'aide de celui-ci, la position d'au moins une caractéristique de référence (17) puisse être déterminée dans une zone d'analyse (15) qui forme une zone partielle de la zone de détection (13),
qu'à l'aide de la position de la caractéristique de référence (17), une position nominale (19) de la trajectoire puisse être déterminée,
qu'une position de proximité (14) de la trajectoire, déterminée hors ligne auparavant, soit comparable avec la position nominale (19) et
que la trajectoire (10) avec des écarts de position soit réajustable,
**caractérisé en ce que**
le capteur est un capteur de distance point à point,
qui comporte un point de capteur (20) qui est une zone de saisie de données ponctuelle du capteur de distance point à point dans laquelle le capteur de distance point à point peut saisir des données,
le point de capteur (20) peut être déplacé au sein de la zone de détection,
la zone de détection peut être balayée ponctuellement dans une fenêtre temporelle par le point de capteur (20) déplaçable, et
**en ce que** le système de détection optique (12) se présente sous une forme telle qu'à l'aide de celui-ci, afin d'augmenter la robustesse aux erreurs, la taille, la position et/ou l'orientation de la zone d'analyse (15) à l'intérieur de la zone de détection (13) est/sont adaptable(s) dynamiquement en fonction d'au moins un paramètre hors ligne déterminant approximativement la position de la caractéristique de référence (17) à l'intérieur de la zone de détection (13) et/ou d'un paramètre en ligne influençant approximativement la position de la caractéristique de référence (17) à l'intérieur de la zone de détection (13).

12. Dispositif selon la revendication précédente, **caractérisé en ce que** le système de détection optique (12) se présente sous une forme selon l'une quelconque ou plusieurs des revendications précédentes.

13. Dispositif selon l'une quelconque des revendications précédentes, **caractérisé en ce que** le système de détection optique (12) est couplé dans le trajet des rayons du système de guidage (6) du faisceau, en particulier au moyen d'un séparateur de faisceau.

14. Dispositif selon l'une quelconque des revendications précédentes, **caractérisé en ce que** la zone de détection peut être balayée ponctuellement à l'aide du capteur de distance point à point dans une fenêtre temporelle, par un point de capteur (20) déplaçable à l'aide d'au moins un miroir rotatif.
